# EUROPEAN PATENT SPECIFICATION

(11) **EP 2 251 281 B1**
(45) Date of publication and mention of the grant of the patent: **26.12.2012**
(21) Application number: 10172545.5
(22) Date of filing: 25.02.2009
(51) Int. Cl.: B65G 43/08, B65G 47/51, B23P 19/00

(54) **Method of operating a feed device of pieces and feed device, particularly for performing such method**
Verfahren zum Betreiben einer Vorrichtung zum Zuführen von Teilen und Vorrichtung zum Zuführen von Teilen insbezondere zur Durchführung solch eines Verfahren
Procédé de fonctionnement de dispositif d'alimentation de pièces et dispositif d'alimentation, particulièrement pour effectuer ce procédé

(30) Priority: 11.03.2008 IT BS20080050
(43) Date of publication of application: 17.11.2010
(62) Divisional of application: 09153630.0
(73) Proprietor: Automazioni Industriali S.R.L., 25085 Lumezzane S.S. BS (IT)
(72) Inventor: Baglioni, Giuliano, 25085 Lumezzane S.S., BRESCIA (IT)
(74) Representative: Pulieri, Gianluca Antonio

(56) References cited:
- US-A- 4 557 655
- US-A1- 2004 226 262

## Description

The present invention relates to a method of feeding pieces to a production machine, such as a press, a machine tool and similar.

Usually, a highly automised production line contains a device for feeding the pieces, a pick-up device and a production machine. See, for example, US 4,557,655 or US 2004/0226262 A1. US 2004/0226262 A1 discloses the preamble of the appended claim 1.

In another example, a conveyor belt feed device is loaded with pieces by an operator; the pieces, transported by the conveyor are taken to a robot; the robot picks up a piece to be processed and puts it in a press, for performance of the scheduled process. On completion of processing, the robot picks up the piece and puts it on another conveyor belt for transport towards further production phases.

The belt advances while it is loaded with pieces by the operator, continuously or discontinuously, depending on the requirements of the production line, this way new pieces to be processed reach the robot at one end of the belt, while another end of the belt, near the operator is freed so as to load more pieces.

Often the operator, for example to perform another task, to go for a break or when finishing a shift leaves the belt area and returns only after a period of time, of varying length, during which an extensive loading area of the belt without new pieces to be processed has formed.

When processing of the pieces already loaded on the belt is finished and the belt arrives at the robot without any pieces, production halts until the arrival of a new piece loaded by the operator upon his return.

Generally speaking, once back at the belt the operator is unable to fill the empty part of the belt since this has already passed the safety barrier preventing access, in the vicinity of the robot.

If, however, the loading area is accessible by the operator, in any case the loading operation forces him to adopt a dangerous position.

The purpose of the present invention is to create an operating method which overcomes the drawbacks spoken of in relation to the known art.

The invention comprises a method for operating a feed device as stated in claim 1.

The characteristics and advantages of the operating method will be evident from the description below, made by way of a non-limiting example, according to the attached figures, wherein:

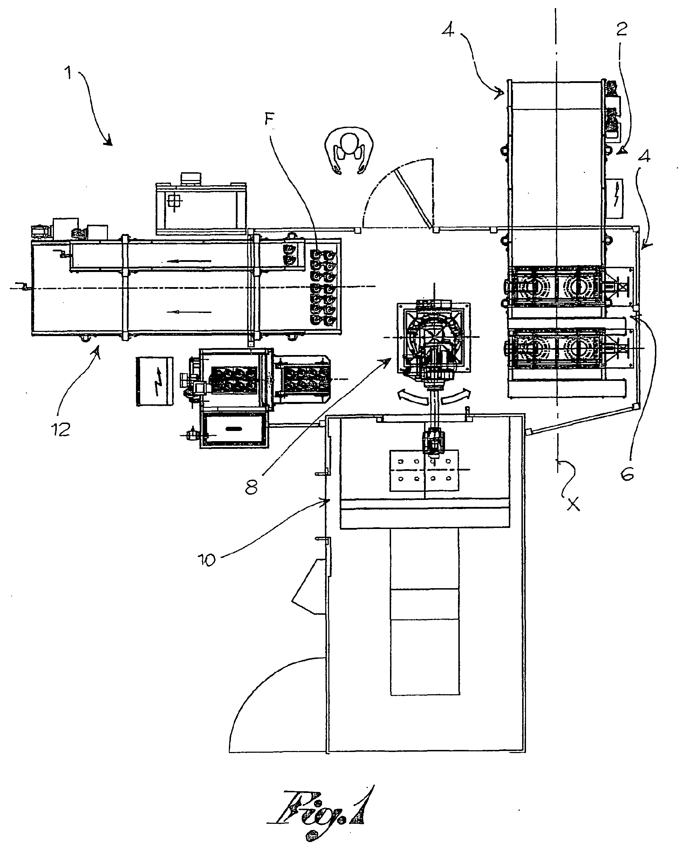

- figure 1 shows an overhead view of a production system comprising a feed device of the present invention, according to a preferred embodiment;

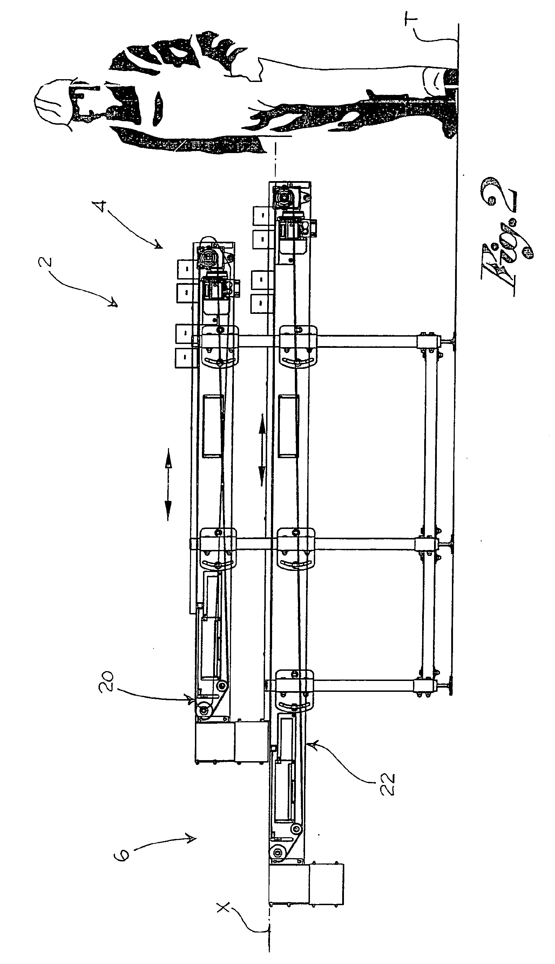

- figure 2 shows a lateral view of the feed device of the system in figure 1;

- figure 3 shows a lateral view of a further feed device according to the present invention.

With reference to the attached figures, reference numeral 1 globally denotes a system for the processing of pieces to be processed and for obtaining processed pieces F.

The system 1 comprises a feed device 2 able to feed pieces to be processed; the feed device 2 is of the belt type, in other words comprising at least one belt for the transport of pieces to be processed placed on it.

Specifically, the feed device has a loading area 4 and a pick-up area 6, distanced along a belt axis X coinciding with the direction of advancement of the pieces on the belt.

Furthermore, the system 1 comprises a pick-up device 8, for instance a robot, and a production machine 10, for instance a press.

The pick-up device 8 is positioned close to the pick-up area 6 of the feed device 2, and is able to pick up the pieces to be processed and offer them to the production machine 10 for processing.

Furthermore, according to an embodiment not part of the present invention, the system 1 comprises a transport device 12, for instance a belt, for the transport of the processed pieces towards subsequent production phases.

For instance, when the press has finished processing a piece, the robot picks up the processed piece and puts it on the belt of the transport device 12, to be taken away.

According to an embodiment not part of the present invention, the system 1 comprises safety barriers 14 which prevent access of the operator in the vicinity of the robot or of the press.

For instance, the feed device 2 protrudes with its loading area outside the area defined by the safety barriers 14, so that the operator can load the pieces to be processed, while the pick-up area 6 is inside the defined area.

The feed device 2 extends along the belt axis X between the loading area 4 and the pick-up area 6.

Preferably, the feed device 2 comprises a first motorised belt 20, for instance horizontal, and a second motorised belt 22, parallel to the first, which extends from the loading area 4 to the pick-up area 6.

For instance, the first belt is positioned above the second belt, that is it vertically overlays the second belt, but is distanced from it so as to allow the transit of the pieces to be processed between said belts.

The belts 20, 22 of the feed device are motorised so as to advance from the loading area towards the pick-up area and vice versa.

In other words, the belts 20, 22 are motorised so that, upon command, the pieces advance from the loading area towards the pick-up area or move backwards from the pick-up area towards the loading area.

The feed device 2 comprises a belt selection mechanism, which can be operated by the operator and is able to select the belt from which the pick-up device picks up the piece to be processed, choosing from said belts 20, 22.

In other words, the loading belt is the belt from which the robot picks up the pieces to be processed and delivers them to the press. The robot could pick up said pieces from the first belt 20 or from the second belt 22. The belt selection mechanism can be operated by the operator to select the belt 20, 22 from which the robot picks up the piece to be processed.

According to an embodiment not part of the present invention, the belt selection mechanism comprises a single belt selection button, operatively connected to a selection control unit.

The selection control unit recognises the loading belt and, in the presence of the signal coming from the belt selection button, designates the loading belt as the passive belt and the passive belt as the new loading belt.

In other words, by pressing the belt selection button, the former passive belt becomes the new loading belt and the former loading belt becomes the new passive belt.

Advantageously, this means that the new loading belt can be designated without error by the operator, in that said operator does not need to make a choice but only to press the belt selection button.

According to a further variation, the belt selection mechanism comprises a first button associated with the first belt and a second button associated with the second belt; by pressing the first or second button the respective belt is designated as the loading belt. The other belt, that is the belt from which the robot does not pick up the pieces to be processed, is called the passive belt.

Furthermore, the feed device 2 comprises a return mechanism, which can be operated by the operator, able to make the passive belt return, that is advance from the pick-up area towards the loading area.

For instance, the return mechanism comprises a return button, positioned close to the loading area; when the button is pressed, the passive belt starts a return movement.

Furthermore, the feed device 2 comprises powered means of advancement, operatively connected to the motors of the belts 20, 22, which can be operated by the operator and able to make the passive belt advance, in other words move from the loading area towards the pick-up area.

Said powered means of advancement comprise a pedal, for instance protruding from the floor; when the pedal is pressed by the operator, the passive belt advances.

Furthermore, the feed device 2 comprises means of detection able to detect the presence of pieces to be processed in the pick-up area; specifically, the feed device 2 comprises first means of detection associated with the first belt 20 and second means of detection associated with the second belt 22.

Said means of detection are operatively connected to the motor mechanism of the belts 20, 22, to order advancement of the loading belt when no pieces to be processed are detected in the pick-up area and to order stopping of the belts, (for instance, both the loading belt and the passive belt) when pieces to be processed are detected in the pick-up area.

The means of detection are operatively connected to the powered means of advancement, so that if the powered means of advancement are activated (and the operator therefore orders advancement of the passive belt), but the means of detection detects pieces in the pick-up area of the passive belt (which might therefore fall as a result of further advancement), the activation of the powered means of advancement is ignored.

Moreover, the feed device 2 comprises means of visualisation able to acquire the image of the piece to be processed in the pick-up area.

Said means of visualisation are operatively connected to the pick-up device to control its configuration, trajectory and movement so as to efficiently pick up the piece to be processed.

The feed device 2 comprises an automatic designation device, operatively connected to the belt selection mechanism, able to detect the presence of at least one piece on the loading belt and able to interact with the belt selection mechanism to automatically designate the passive belt as the new loading belt should the loading belt not have any more pieces to be processed on it.

We will assume now that the designated loading belt is the first belt 20 and that the second belt 22 is therefore the passive belt.

Preparatively, the passive belt, that is the second belt 22, is full of pieces to be processed in the pick-up area. The second means of detection detect the pieces to be processed in the pick-up area of the second belt 22 and order it to stop.

Normally, the operator loads the first belt 20; when the piece to be processed has been picked up, the first means of detection detects the absence of pieces to be processed in the pick-up area 6 of the first belt and orders its advancement.

In the loading area 4 of the first belt 20 an empty area therefore forms, where the operator puts a further piece to be processed.

Assuming that the operator is absent for a period of time, for instance to perform another task, to go for a break or when finishing a shift, while production continues and the first belt 20 advances, a progressively larger empty area forms in the loading area.

When the operator returns to the feed device, he activates the belt selection mechanism (preferably by pressing the single belt selection button), selecting the second belt 22 as the loading belt: the pick-up device 8 will therefore pick up the next piece to be processed from the second belt 22 and no longer from the first belt 20.

The operator then activates the return mechanism, for instance by pressing the return button, causing the backward movement of the first belt 20, until the empty area is sufficiently reduced.

At this point, the return button is released causing the passive belt, that is the first belt 20 to stop.

The operator recommences loading of the passive belt, that is the first belt 20, which tends to progressively advance, at the operator's command, by activation of the powered means of advancement (preferably by pressing the pedal) until the first means of detection detect pieces to be processed in the pick-up area.

In the meantime, the pick-up device 8 has continued to pick up pieces to be processed from the loading belt 22, without halting production.

According to further variations, the first belt 20 and the second belt 22 are alongside and close to each other, for instance at the same height; according to a further embodiment, the first belt 20 is alongside but distanced from the second belt, so that the operator can stand between them.

In the case in which the operator is absent for such a long time that all the pieces present on the loading belt are finished, the automatic designation device detects the absence of pieces on the loading belt and interacts with the belt selection mechanism so that automatically, that is without intervention of the operator, the passive belt is designated as the new loading belt and the loading belt as the new passive belt.

Advantageously, the passive belt therefore also acts as a reserve, or depot of pieces to be processed.

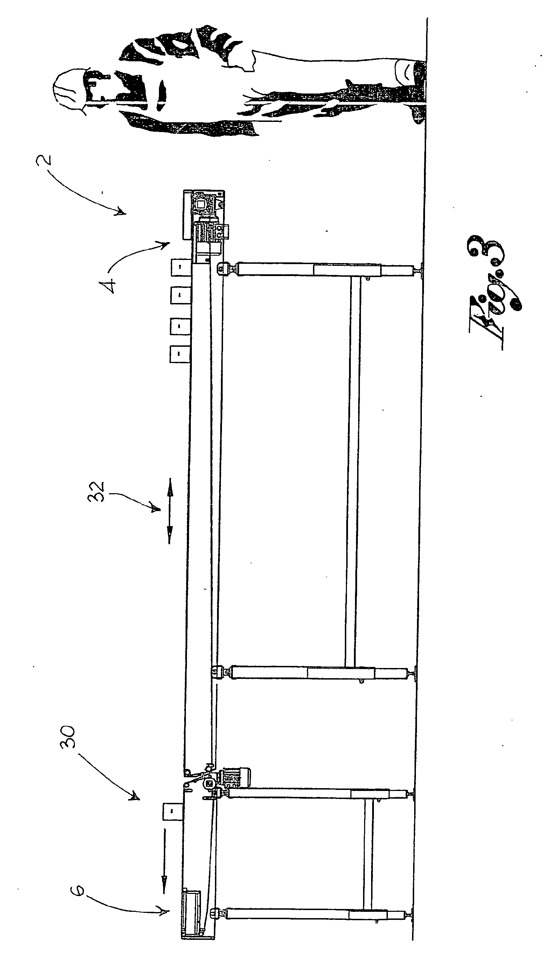

According to the invention, the feed device 2 comprises a primary belt 30, from which the pieces to be processed are picked up, and a secondary belt 32, upline of the primary belt 30, to supply it with pieces to be processed (figure 3).

The secondary belt 32 is close enough to the primary belt 30, to be able to allow the passage of the pieces to be processed from the first to the second.

The primary belt 30 comprises said first means of detection and said second means of detection: the first means of detection is positioned downline of the primary belt 30, while the second means of detection is positioned upline of the primary belt 30.

Moreover, the secondary belt 32 comprises said return mechanism.

The pieces to be processed are loaded by the operator in the loading area 4 of the secondary belt 32 and transferred from the secondary belt 32 to the primary belt 30.

The pick-up device picks up the pieces to be processed from the primary belt 30, for instance from the pick-up area 6 of the same.

When the pick-up area 6 of the primary belt 30 presents pieces to be processed, the first means of detection detects the presence of said pieces and orders the primary belt 30 to stop.

The pick-up device 8 picks up the pieces to be processed and production proceeds.

If upline of the primary belt there are no pieces to be processed, the second means of detection detects the absence of pieces to be processed in the area upline of the primary belt 30 and orders the advancement of the secondary belt 32, so that the pieces to be processed are transferred from the secondary belt 32 to the primary belt 30.

If, instead, upline of the primary belt there are pieces to be processed, the second means of detection detects the presence of pieces to be processed in the area upline of the primary belt 30 and orders the secondary belt 32 to stop.

If the operator leaves the feed device 2, an empty area forms in the loading area 4 of the secondary belt 32.

When the operator returns to the feed device, he activates the return mechanism, causing the secondary belt 32 to move backwards until the empty area is sufficiently reduced.

Subsequently, the operator disactivates the return mechanism and begins to load the secondary belt 32, ordering advancement of the same using the powered means of advancement, so as to feed new pieces to be processed to the primary belt 30.

Innovatively, the method of operating a feed device of pieces and said feed device of pieces, overcome the problem of production interruptions caused by lack of pieces on the feed belts.

Advantageously, moreover, the invention prevents the operator from having to adopt dangerous positions, for instance trying to fill the empty area of the conveyor belt and passing the safety barriers.

According to a further advantageous aspect, the invention permits a considerable lengthening of the period of autonomy of the production line.

According to yet a further advantageous aspect, the invention permits management of production lines with high or low pieces to be processed, in relation to their tendency to fall over as a result of movement of the belt.

Advantageously, moreover, the selection mechanisms prevent errors when choosing the loading belt, by being respectively associated to the belt selected as loading belt.

It is clear that a person skilled in the art may make modifications to the method according to the present invention, so as to satisfy contingent and specific requirements while remaining within the sphere of protection as defined by the appended claim.

## Claims

1. Method of operating a feed device (2) of pieces, comprising, in succession, the phases of;
- feeding the pieces to be processed to a pick-up device (8) by means of a primary belt (30);
- feeding the pieces to be processed to said primary belt (30) by means of a secondary belt (32), wherein said secondary belt (32) comprises a loading area (4) to be loaded with the pieces ;
- detecting an empty area without any pieces on said secondary belt;
- making the secondary belt (32) move backwards to reduce the empty area;
said method being **characterized in that** it comprises a phase of loading the pieces to be processed on said loading area (4) of the secondary belt (32), in the reduced empty area.

## Patentansprüche

1. Verfahren zum Betreiben einer Zuführvorrichtung (2) von Stücken bzw. Teilen, die in Folge die Phasen umfasst:
- Zuführen der herzustellenden Stücke an eine Aufnahmevorrichtung (8) mittels eines primären Bands (30);
- Zuführen der herzustellenden Stücke an das primäre Band (30) mittels ei-nes sekundären Bands (32), wobei das sekundäre Band (32) einen Lade-bereich (4) umfasst, der mit den Stücken zu beladen ist;
- Detektieren eines leeren Bereichs ohne jegliche Stücke auf dem sekundä-ren Band;
- Bewirken, dass sich das sekundäre Band (32) nach hinten bzw. rückwärts bewegt, um den leeren Bereich zu reduzieren;
wobei das Verfahren **dadurch gekennzeichnet ist, dass** es eine Phase des Ladens der herzustellenden Stücke auf den Ladebereich (4) des sekundären Bands (32) umfasst, und zwar in dem reduzierten leeren Bereich.

## Revendications

1. Procédé de mise en oeuvre d'un dispositif d'avance (2) de pièces, comprenant, successivement, les phases :
- d'avance des pièces à traiter vers un dispositif de prise (8) au moyen d'une courroie principale (30) ;
- d'avance des pièces à traiter vers ladite courroie principale (30) au moyen d'une courroie secondaire (32), dans lequel ladite courroie secondaire (32) comprend une zone de chargement (4) destinée au chargement des pièces;
- de détection d'une zone vide sans aucune pièce sur ladite courroie secondaire ;
- de déplacement de la courroie secondaire (32) en arrière pour réduire la zone vide ;
ledit procédé étant **caractérisé en ce qu'**il comprend une phase de chargement des pièces à traiter sur ladite zone de chargement (4) de la courroie secondaire (32), dans la zone vide réduite.
